# FASCICULE DE BREVET EUROPEEN

(11) **EP 2 379 688 B1**
(45) Date de publication et mention de la délivrance du brevet: **05.03.2014**
(21) Numéro de dépôt: 10706702.7
(22) Date de dépôt: 13.01.2010
(51) Int. Cl.: C11C 3/04, C10L 1/02, C11C 1/00, C11C 1/08

(54) **PROCEDE D'OBTENTION D'UNE FRACTION ENRICHIE EN ESTERS D'ACIDES GRAS FONCTIONNALISES A PARTIR DE GRAINES DE PLANTES OLEAGINEUSES**
VERFAHREN ZUR GEWINNUNG EINER MIT FUNKTIONALISIERTEN FETTSÄUREESTERN ANGEREICHERTEN FRAKTION AUS SAMEN ÖLHALTIGER PFLANZEN
METHOD FOR OBTAINING A FRACTION ENRICHED WITH FUNCTIONALISED FATTY ACID ESTERS FROM SEEDS OF OLEAGINOUS PLANTS

(30) Priorité: 20.01.2009 FR 0950330
(43) Date de publication de la demande: 26.10.2011
(73) Titulaire: Arkema France, 92700 Colombes (FR)
(72) Inventeur: DUBOIS, Jean-Luc, F-69390 Millery (FR); PICCIRILLI, Antoine, F-86000 Poitiers (FR); BARBIER, Jacques, F-86360 Montamise (FR); MAGNE, Julien, F-86240 Iteuil (FR)
(86) Numéro de dépôt international: PCT/FR2010/050047
(87) Numéro de publication internationale: WO 2010/084276

(56) Documents cités:
- GB-A- 707 421
- GB-A- 797 357
- US-A1- 2005 016 059
- US-B2- 7 112 229
- TASSIGNON P ET AL: "An efficient countercurrent distribution method for the large-scale isolation of dimorphecolic acid methyl ester" CHEMISTRY AND PHYSICS OF LIPIDS, LIMERICK, IR, vol. 71, no. 2, 23 mai 1994 (1994-05-23), pages 187-196, XP024783912 ISSN: 0009-3084 [extrait le 1994-05-23] cité dans la demande

## Description

La présente invention concerne le domaine de l'oléochimie. Plus particulièrement, l'invention concerne un procédé d'extraction sélective d'esters d'acides gras fonctionnalisés, à partir de graines de plantes oléagineuses.

Les plantes oléagineuses renferment de nombreux acides gras, dont les plus répandus sont : l'acide palmitique, l'acide stéarique, l'acide oléique, l'acide linoléique, l'acide linolénique, l'acide érucique, etc. Parmi les acides gras des plantes oléagineuses se trouvent également des acides gras fonctionnalisés notamment au moyen d'une ou plusieurs fonctions alcool ou d'une fonction époxyde. Les plus connus sont les acides gras suivants :
- acide ricinoléique (acide 12-hydroxy cis 9-octadécénoïque), présent majoritairement dans l'huile de ricin (entre 85 et 90%) extraite de graines de ricin (*Ricinus communis*); cet hydroxyacide est présent également à une teneur d'environ 18% dans l'huile extraite de graines de *Jatropha gossypiifolia* ou dans celle de *Hevea brasiliensis ;*
- acide lesquérolique (acide 14-hydroxy-11-eicosanoïque) extrait de graines provenant d'espèces du genre *Lesquerrella à une teneur d'environ 70%* dans l'huile extraite de graines provenant d'espèces du genre *Lesquerrella,* dans lesquelles se trouvent également deux autres hydroxyacides : l'acide densipolique (acide 12-hydroxy-9,15-octadécadiènoïque) et l'acide auricolique (acide 14-hydroxy-11,17-éicosadiènoïque) ;
- acide béta-dimorphécolique (9-OH-18:2Δ^{10*trans,*12*trans*}) présent dans l'huile extraite de graines de *Dimorphoteca pluvialis,* et son isomère l'acide coriolique (acide 13-hydroxy-9,11-octadécadiènoïque) présent à une teneur d'environ 70% dans l'huile extraite des graines de *Coriaria myrtifolia* ;
- acide kamlolénique (acide 18-hydroxy-9,11,13-octadécatriénoïque) présent dans l'huile extraite des graines de l'arbre Kamala (*Mallotus phillipinensis*) ;
- acide 2- hydroxylinoléique présent à une teneur d'environ 13% dans l'huile extraite de graines de Thymus vulgaris;
- acide coronarique (acide 9,10-époxy-cis -octadéc-12- ènoïque) présent dans l'huile de tournesol (*Chrysentemum*), ou à une teneur d'environ 91% dans les graines de *Bernardia pulchella* ;
- acide vernolique (acide cis-12,13-époxyoléique) présent à une teneur allant de 60 à 75% dans l'huile extraite des graines de *Euphorbia lagascae* ou de plantes du genre *Vernonia,*
ainsi que les homologues hydrogénés de ces acides gras insaturés.

Les esters d'acides gras oléagineux sont classiquement obtenus par transéstérification de l'huile raffinée obtenue à partir de graines par pression suivie d'une extraction à l'aide d'un solvant organique comme l'hexane ou l'acétone.

Cet ensemble de procédés est laborieux, car comportant de nombreuses étapes de transformation physico-chimiques. Par ailleurs, les esters d'acides gras hydroxylés ainsi obtenus ont un coût de fabrication élevé.

La demande de brevet EP 1 119 600 décrit un procédé de fabrication d'esters d'acides gras à partir de graines oléagineuses, en milieu alcoolique éventuellement additionné d'un autre solvant organique, par exemple une cétone ou un hydrocarbure aliphatique, en présence d'un catalyseur basique. Ce procédé est avantageux, car il permet de réduire les coûts de fabrication des esters d'acides gras, et présente de très bons rendements en ces produits.

Toutefois, ce procédé présente les inconvénients i) et ii) suivants :
i) Cette technologie n'est pas simplement transposable aux graines de plantes oléagineuses dont les huiles extraites ont des teneurs d'au moins 10% en acides gras fonctionnalisés, notamment hydroxylés, tels que l'acide ricinoléique ou l'acide lesquérolique. Une de ces plantes est le ricin. L'huile de ricin comprend comme composant principal le triricinoléate de glycérol. L'acide ricinoléique est un acide gras hydroxylé. Aucune autre huile naturelle connue ne contient une proportion aussi élevée d'acides gras hydroxylés. C'est cette composition caractéristique des glycérides qui distingue l'huile de ricin de toutes autres graisses et huiles végétales et c'est elle qui lui donne ses propriétés physiques et chimiques remarquables. L'huile de ricin, non siccative, possède ainsi l'indice de viscosité et la densité les plus élevés entre toutes les huiles naturelles. Ces propriétés sont dues notamment aux liaisons hydrogène formées entre les groupes hydroxyles. Par ailleurs, le méthanol est beaucoup plus soluble dans l'huile de ricin, mais malheureusement le glycérol aussi. Ce sont ces propriétés qui imposent à l'huile de ricin un comportement très particulier lors des réactions chimiques et qui font que les procédés de transestérification d'huiles végétales « ordinaires » connus ne puissent pas tout simplement être transposés à l'huile de ricin (N.B. par « huile ordinaire » on entend les huiles non fonctionnalisées extraites de plantes oléagineuses telles que le tournesol, le colza, le soja, l'arachide, l'olivier, le sésame, le carthame, le coprah, le palme).
ii) En outre, ce procédé ne permet pas d'extraire sélectivement les esters d'acides gras fonctionnalisés, notamment hydroxylés, du mélange d'esters d'acides gras obtenus par la réaction de transestérification. Or, il est souhaitable de disposer d'une fraction enrichie en esters d'acides gras hydroxylés, contenant par exemple du ricinoléate de méthyle (ou 12-hydroxy cis 9-octadécénoate de méthyle), car une telle fraction représente le point de départ dans la fabrication d'acide 11-amino undécanoïque, monomère constitutif du Rilsan^{®} 11, qui est un polyamide aux propriétés physiques exceptionnelles, développé par la demanderesse. Lors de la fabrication de l'acide 11-amino undécanoïque, le ricinoléate de méthyle est amené à subir un craquage thermique en phase gazeuse. A cet effet, il doit contenir un minimum de glycérides, c'est à dire de tri-, di- et mono-glycérides car ces produits sont très difficiles à vaporiser, et souvent se décomposent avant vaporisation, ce qui a pour conséquence de baisser la sélectivité du craquage. De même, le ricinoléate de méthyle doit contenir un minimum d'acide ricinoléique, lui aussi difficile à vaporiser.

Le document US 7 112 229 décrit un procédé d'obtention d'esters d'acides gras pour une application biodiesel. Le procédé est mis en oeuvre à partir de graines de plantes oléagineuses riches en huiles. Ce procédé comprend une étape préalable de conditionnement des graines, au cours de laquelle :
- les graines sont décortiquées puis nettoyées au tamis vibrateur,
- les graines nettoyées sont séchées de sorte à réduire leur taux d'humidité à moins de 0,5% en poids.

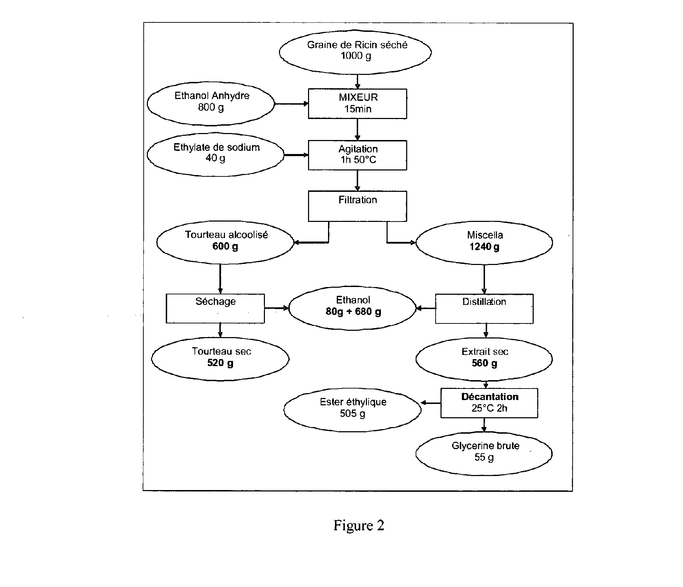

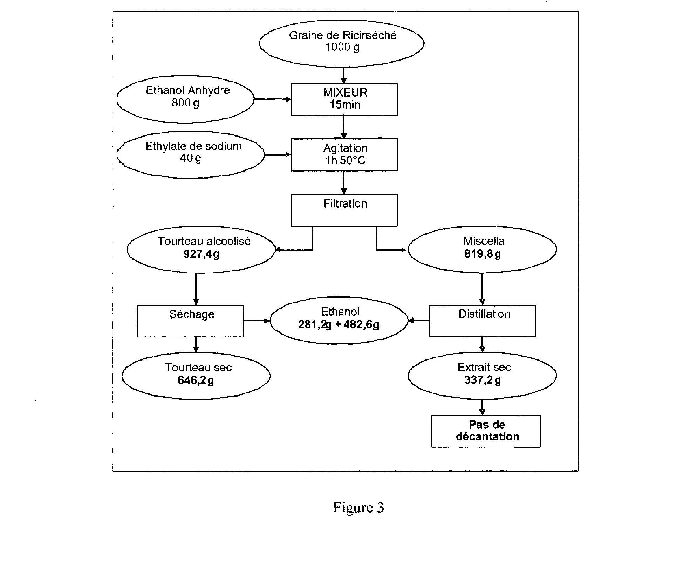

Les graines séchées sont introduites dans un réacteur avec de l'alcool anhydre ; ce mélange hétérogène est transformé en une suspension homogène au moyen d'un agitateur. Ce n'est qu'à ce moment qu'un catalyseur basique est introduit dans le réacteur. Ce mélange de réaction est ensuite chauffé pendant 30 à 90 minutes à une température de 30 à 78°C, conduisant à la transestérification des triglycérides en esters avec un taux de conversion élevé, compris entre 98 et 100%. La Demanderesse a procédé à des tests suivant les conditions figurant dans l'unique exemple décrit dans ce document, mais n'a pas réussi à obtenir les mêmes résultats (voir exemple 5 et les figures 2 et 3 annexées). On ne peut donc considérer que cette technique est maîtrisée par l'homme du métier à présent.

Un procédé d'extraction sélective d'esters d'un acide hydroxylé est décrit dans la publication de Tassignon P. et al., Chem. Phys. Lipids 71 (1994), 187-196. Ce document décrit l'obtention de l'ester méthylique d'acide dimorphécolique par transestérification de l'huile brute extraite de graines de *Dimorphotheca pluvialis* en présence de méthanol et d'un catalyseur basique. La réaction de transesérification est suivie d'une étape d'extraction au moyen de mélanges méthanol aqueux/hexane (1 :1) ou acétonitrile/hexane. Les données présentées dans le Tableau 1 montrent que la séparation au moyen de mélanges méthanol aqueux/hexane est meilleure que celle réalisée au moyen d'un mélange acétonitrile/hexane. Ce procédé demeure très laborieux, une séparation efficace nécessitant 4 entonnoirs et 14 étages de séparation des mélanges biphasiques. De plus, les extractions liquide-liquide décrites dans le paragraphe 2.12 exigent la consommation d'une grande quantité de solvants : 1970 ml d'hexane et 3360 ml de solution de méthanol sont nécessaires pour traiter 70,3 g d'ester méthylique et récupérer 37,2 g d'huile contenant 95% d'ester méthylique d'acide dimorphécolique. De telles quantités de solvant ne sont pas compatibles avec une application à l'échelle industrielle du procédé d'extraction sélective décrit.

La présente invention se propose de remédier à ces inconvénients au moyen d'un procédé qui permet d'extraire sélectivement les esters d'acides gras fonctionnalisés. Par « acide gras fonctionnalisé » on entend dans le cadre de l'invention tout acide gras portant notamment une ou plusieurs fonctions alcool ou une fonction époxyde.

Un objet de l'invention est donc de permettre l'obtention d'une fraction enrichie en esters d'acides gras fonctionnalisés, notamment hydroxylés, ladite fraction convenant en particulier à une utilisation comme matière première dans la synthèse de produits chimiques intermédiaires tels que l'acide 11-amino undécanoïque.

Un autre objet de l'invention consiste à obtenir ces esters d'acides gras fonctionnalisés directement à partir de graines oléagineuses avec des rendements élevés, de sorte à réduire leur coût de fabrication.

La présente invention concerne un procédé d'extraction sélective d'esters d'acides gras fonctionnalisés à partir de graines de plantes oléagineuses comprenant :
a) au moins une étape d'extraction des esters d'acides gras consistant en l'introduction simultanée dans un réacteur contenant lesdites graines, d'un alcool léger anhydre, d'un catalyseur basique et d'un solvant d'extraction non miscible avec ledit alcool léger et dans lequel ledit ester d'acide gras fonctionnalisé n'est pas soluble, conduisant à l'obtention d'un mélange d'esters et de glycérol, et
b) au moins une étape d'extraction sélective des esters d'acides gras hydroxylés par introduction dans le réacteur dudit solvant d'extraction à contre-courant de l'alcool léger, conduisant à l'obtention d'une phase alcool enrichie en esters d'acides gras d'une phase glycérol et d'un tourteau.

Ce procédé permet d'obtenir une fraction concentrée en esters d'acides gras fonctionnalisés, hydroxylés ou époxydés, d'une phase solvant contenant les autres esters d'acides gras non fonctionnalisés, directement à partir des graines de plantes oléagineuses. Les esters d'acide gras fonctionnalisés visés dans le cadre de l'invention sont des esters notamment d'origine végétale, contenant majoritairement des triglycérides d'acides gras. La teneur totale en acides gras fonctionnalisés dans l'huile contenant ces esters doit être d'au moins 10% en poids.

Les plantes oléagineuses sont cultivées spécifiquement pour leurs graines ou leurs fruits oléifères riches en matières grasses dont on extrait de l'huile à usage alimentaire, énergétique ou industriel. Les plantes protéagineuses appartiennent au groupe botanique des légumineuses dont les graines sont riches en protéines. Les plantes oléo-protéagineuses sont des légumineuses dont les graines contiennent aussi de l'huile.

Par « graines de plantes oléagineuses » on entend dans le cadre de la présente invention notamment des graines de plantes de ricin, seules ou en mélange avec des graines provenant d'au moins une autre plante oléagineuse, oléo-protéagineuse ou protéagineuse, les graines ou le mélange de graines produisant une huile contenant au moins 10% en poids d'acide ricinoléique. On ne sortirait pas du cadre de l'invention lorsque les graines mises en oeuvre dans le procédé selon l'invention proviennent en tout ou partie de plantes génétiquement modifiées produisant de l'acide ricinoléique, seules ou en mélange avec des plantes oléagineuses éventuellement génétiquement modifiées.

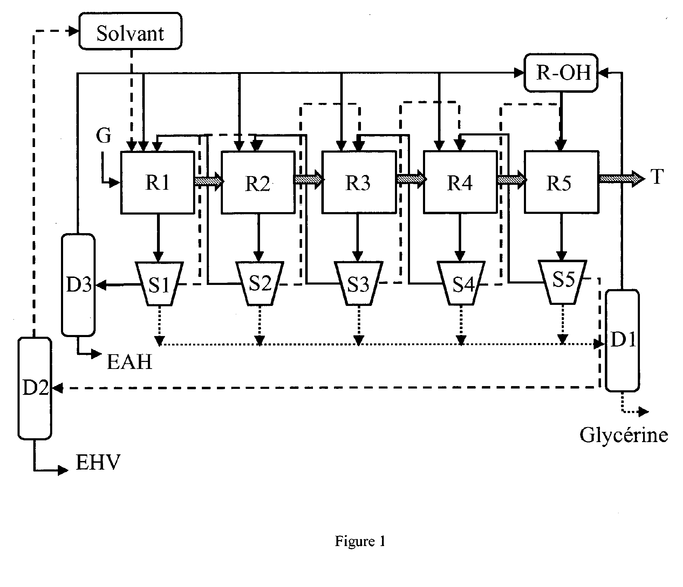

D'autres caractéristiques et avantages ressortiront de la description détaillée du procédé d'extraction sélective selon l'invention qui va suivre et de la figure 1 annexée, représentant de manière schématique le procédé d'extraction sélective d'esters d'acides gras hydroxylés selon l'invention, dans une variante de réalisation comportant 5 étages de réaction.

L'objet de la présente invention est de fournir un procédé permettant de concentrer en ester d'acide gras hydroxylé une fraction résultant de la transestérification effectuée directement sur les graines d'oléagineux. Lorsqu'on part de graines de ricin seules ou en mélange (comme indiqué plus haut), le but est d'obtenir une fraction enrichie en ester d'acide ricinoléique.

Il a maintenant été trouvé qu'un ester d'acide gras fonctionnalisé, hydroxylé ou époxydé, peut être extrait sélectivement au moyen d'un procédé mettant en oeuvre un mélange réactionnel comportant un alcool léger anhydre, d'un catalyseur basique et d'un solvant d'extraction non miscible avec ledit alcool léger et dans lequel ledit ester d'acide gras fonctionnalisé n'est pas soluble. Avantageusement, ledit solvant d'extraction est introduit à contre-courant de l'alcool léger, provoquant simultanément un phénomène d'extraction des esters non fonctionnalisés dans la coupe (ou phase) solvant, et donc un enrichissement en ester(s) fonctionnalisé(s) dans la coupe alcool.

Il est certes connu d'utiliser des solvants pour faciliter la réaction de transestérification, car dans le cas des huiles végétales non hydroxylées, le méthanol n'est pas soluble dans l'huile, ce qui ralentit fortement la réaction de transestérification. L'ajout d'un cosolvant va favoriser ici l'homogénéisation du milieu de réaction, aidant les esters d'acide gras à devenir plus solubles dans l'alcool. Cependant, dans ce cas, le glycérol n'est pas non plus soluble dans l'ester méthylique de l'huile végétale et se sépare donc plus spontanément. La publication « The Biodiesel Handbook », ed. G. Knothe, J. Van Gerpen et J. Krahl, AOCS Press 2005 décrit l'ajout de cosolvants tels que le tétrahydrofurane (THF) ou le méthyl-tertiobutyl-éther (MTBE) pour accélérer la méthanolyse d'huiles végétales (chapitre 4.1, page 6). Cependant, les rapports molaires alcool :huile ainsi que d'autres paramètres se trouvent affectés par cet ajout de cosolvants.

Le solvant est choisi dans ce cas pour être récupéré et a par conséquent un point d'ébullition assez bas pour pourvoir être distillé.

Dans le cas des huiles riches en acides fonctionnalisés, comme l'huile de ricin, de lesquerella ou de dimorphética, le méthanol est soluble dans l'huile. L'ajout d'un solvant organique (cosolvant) va favoriser ici l'obtention d'un milieu hétérogène, afin d'inciter les esters d'acides gras non fonctionnalisés à passer dans la phase non-alcoolique et les esters d'acides gras fonctionnalisés à rester dans la phase alcoolique.

Le procédé selon l'invention vise donc à provoquer une séparation de phases afin d'enrichir la phase alcoolique en ester d'acides gras fonctionnalisés et la phase solvant en ester d'acides gras non- fonctionnalisés.

Le procédé d'extraction sélective d'esters d'acides gras fonctionnalisés à partir de graines de plantes oléagineuses comprend :
a) au moins une étape d'extraction des esters d'acides gras consistant en l'introduction simultanée dans un réacteur contenant lesdites graines, d'un alcool léger anhydre, d'un catalyseur basique et d'un solvant d'extraction non miscible avec ledit alcool léger et dans lequel ledit ester d'acide gras hydroxylé n'est pas soluble, conduisant à l'obtention d'un mélange d'esters et de glycérol, et
b) au moins une étape d'extraction sélective des esters d'acides gras fonctionnalisés par introduction dans le réacteur dudit solvant d'extraction à contre-courant de l'alcool léger, conduisant à l'obtention d'une phase alcool enrichie en esters d'acides gras fonctionnalisés, d'une phase solvant contenant les autres esters d'acides gras non fonctionnalisés, d'une phase glycérol et d'un tourteau.

Selon un mode de réalisation, les plantes oléagineuses sont des plantes de ricin, et l'ester d'acide gras hydroxylé est l'ester d'acide ricinoléique.

Il est souhaitable que les graines mises en oeuvre dans le procédé selon l'invention aient un taux d'acidité inférieur à 2 mg KOH/g. En effet, de taux plus élevés en acides gras libres dans la graine utilisée comme matière première conduisent à la formation de savons en milieu basique.

Dans une variante de réalisation, les graines subissent au préalable un conditionnement comprenant une étape d'aplatissage et éventuellement une étape de séchage des graines aplaties. Ce conditionnement est effectué sur les graines entières. Il comprend une première opération d'aplatissage des graines, suivie facultativement d'une opération de séchage des graines aplaties.

L'objectif du conditionnement de la graine est de rendre l'huile la plus accessible possible à l'alcool, sans toutefois trop altérer sa résistance mécanique. Ceci évite la formation d'une pâte et des fines, respectivement préjudiciables à la mise en oeuvre d'un procédé continu et à la purification finale des esters produits. Par ailleurs, la graine conditionnée doit permettre un passage aisé du fluide réactionnel (mélange alcool - catalyseur basique) selon un simple phénomène de percolation.

Selon une variante de réalisation, les graines fraîches sont aplaties sur un aplatisseur mécanique à rouleaux lisses ou cannelés.

Les graines ainsi aplaties peuvent être séchées, par exemple dans une étuve ventilée thermorégulée ou dans un séchoir continu à bande ou rotatif à air chaud. La durée de séchage et la température sont choisies en sorte d'obtenir une diminution de l'humidité des graines à des valeurs inférieures ou égales à 2% en poids. De préférence, le séchage est réalisé rapidement après aplatissage, en moins de une heure, de préférence après 5 à 10 minutes, à une température suffisante pour réduire le taux d'humidité des graines à 2% en poids ou moins.

L'humidité résiduelle de la graine est déterminée par thermogravimétrie. La graine est préalablement broyée, puis le broyat obtenu est séché à 105°C dans une thermobalance jusqu'à stabilisation du poids. La teneur en eau est exprimée en pourcentage de la matière brute.

Selon un autre mode de réalisation, les graines ne sont pas séchées après aplatissage. Ceci convient particulièrement pour les solvants d'extraction ayant une température d'ébullition élevée, tels que le kerdane, le gazole, le pétrole lampant (voir l'exemple 4.2). De manière surprenante, il a été constaté qu'en présence de ces solvants, l'eau restée dans la graine ne constitue pas un poison pour la réaction de transestérification.

Dans une variante préférée de réalisation, l'étape de conditionnement des graines comprend en outre une opération de préchauffage des graines, effectuée avant l'opération d'aplatissage. Cette opération de préchauffage confère à la graine une plus grande plasticité et donc un écrasement plus efficace lors de l'aplatissage (gain au niveau de la surface de contact, de la vitesse de percolation de l'alcool et donc de sa capacité extractive). Elle a lieu de préférence à une température inférieure ou égale à 100°C.

Les graines conditionnées ou non sont soumises selon le procédé de l'invention à une première étape d'extraction des esters d'acides gras, suivie d'une étape de séparation des esters d'acides gras hydroxylés.

### a) Etape d'extraction et de transestérification (trituration réactive)

Les graines, éventuellement conditionnées comme décrit plus haut, sont mises en contact dans un réacteur avec un alcool léger anhydre, un catalyseur alcalin et un solvant d'extraction, dans des conditions de température, d'agitation et de durée suffisantes pour permettre l'extraction des triglycérides à partir des graines et la transestérification desdits triglycérides, conduisant à l'obtention d'un mélange comprenant des esters d'acides gras et du glycérol, et d'un tourteau. Avantageusement, d'une part, le solvant d'extraction est non miscible avec ledit alcool léger et, d'autre part, ledit ester d'acide gras hydroxylé n'est pas ou peu soluble dans ce solvant.

### b) Etape d'extraction sélective de l'ester d'acide gras hydroxylé

Cette étape a lieu simultanément avec l'étape précédente, et consiste en l'introduction dans le réacteur dudit solvant d'extraction à contre-courant de l'alcool léger, conduisant à l'obtention d'une phase alcool enrichie en esters d'acides gras hydroxylés, d'une phase solvant contenant les autres esters d'acides gras non hydroxylés, d'une phase glycérol et d'un tourteau. Les différentes phases peuvent éventuellement être lavées, pour atteindre les caractéristiques techniques souhaitées.

Le procédé d'extraction sélective selon l'invention comprend au moins une étape a) d'extraction et de transestérification et au moins une étape b) d'extraction sélective de l'ester ou des esters d'acide gras hydroxylé(s). De préférence, ces étapes sont répétées au moins deux fois. Selon un mode de réalisation, le procédé comprend plusieurs étages consécutifs de réaction, avec soutirage de l'alcool, (éliminé par exemple partiellement par évaporation), séparation de la glycérine produite, réinjection d'alcool et poursuite de la trituration.

Dans le mode de réalisation illustré dans la figure 1 annexée, le procédé d'extraction est réalisé au moyen de cinq réacteurs consécutifs et comprend donc cinq étages d'extraction.

L'installation représentée dans cette figure comprend une série de cinq réacteurs montés en cascade. Les Graines (G) alimentent le Réacteur 1 (R1). Du solvant frais est alimenté dans le même réacteur, ainsi que de l'alcool frais et de la solution alcoolique provenant de l'étage réactionnel suivant. On soutire de ce premier étage réactionnel, une fraction solide (graines partiellement extraites, S1), et une fraction liquide. Cette dernière fraction est séparée en 3 composantes : une fraction glycérineuse, une fraction alcoolique, une fraction organique riche en solvant. La fraction solvant est dirigée vers le réacteur suivant. La fraction alcoolique est dirigée vers une unité de séparation (D3) par exemple par distillation pour extraire l'ester d'acide gras hydroxylé (EAH) et l'alcool qui est envoyé vers le stockage et en partie vers chaque étage réactionnel.

L'alcool étant consommé à chaque étage réactionnel, il est préférable d'en alimenter une partie à chaque étage afin de maintenir des ratios suffisants tout au long de la réaction.

La séparation des différentes fractions peut se faire de différentes façons, dont une centrifugation, décantation et/ou une distillation. Optionnellement, on neutralise le catalyseur avant l'étape de séparation de la phase glycérineuse de la phase alcoolique, et dans ce cas, on réinjecte du catalyseur à l'étage suivant.

A l'étage réactionnel suivant (R2), les graines partiellement converties sont mises en contact avec la coupe alcoolique provenant de l'étage suivant (R3), la fraction solvant de l'étage précédent (R1), et éventuellement de l'alcool frais ainsi que du catalyseur. Comme à l'étage précédent, une séparation (S2) est effectuée sur la fraction liquide sortant du réacteur. La séparation de la fraction glycérineuse de la fraction alcoolique est optionnelle, et ne nécessite pas d'être effectuée à tous les étages de réaction.

Au dernier étage de réaction (R5), on alimente le réacteur avec de l'alcool frais, et on soutire un tourteau humide (T) qui est séché pour récupérer l'alcool. La fraction solvant est isolée est dirigée vers une unité de séparation (D2) par exemple par distillation pour séparer le solvant qui est recyclé et l'ester d'huile végétale (EHV).

Les fractions glycérineuses sont collectées, et distillées pour récupérer la fraction alcool qui s'y est dissoute.

Un procédé de ce type est opéré à contre-courant d'alcool et à co-courant de solvant, ce qui permet d'isoler des fractions enrichies en EAH d'une part et appauvries d'autre part.

Dans une variante du procédé (non représentée), les graines sont introduites au réacteur 2, le réacteur 1 servant alors de finisseur afin d'améliorer la séparation dans les phases solvant et alcoolique.

De préférence les unités de séparation D1, D2, D3 utilisent des technologies de pompe à chaleur, par exemple par recompression mécanique des vapeurs, ou par une pompe à chaleur externe.

L'alcool léger utilisé est un alcool aliphatique inférieur tel que le méthanol, l'éthanol, l'isopropanol et le n-propanol, et de préférence est le méthanol.

Le catalyseur basique mis en oeuvre dans le procédé est choisi dans le groupe: soude, soude alcoolique, soude solide, potasse, potasse alcoolique, potasse solide, méthylate de sodium ou de potassium, éthylate de sodium ou de potassium, propylate de sodium et de potassium, isopropylate de sodium et de potassium.

Comme solvants d'extraction on peut citer : l'hexane, l'heptane, le benzène, le bicyclohexyle, le cyclohexane, la décaline, le décane, hexane (Texsolve C), le kérosène, le kerdane, le gazole, le pétrole lampant, Méthylcyclohexane, le Texsolve S ou S-66, Naphta (Texsolve V), Skellite, le Tetradécane, le Texsolve (B, C, H, S, S-2, S-66, S-LO, V), le CO₂ supercritique, le propane ou le butane pressurisés, les solvants naturels tels que les terpènes (limonène, alpha et béta pinène, etc). De préférence, le solvant d'extraction a une température d'ébullition élevée, supérieure à 100°C ou mieux à 200°C, par exemple comprise entre 200 et 350°C.

L'ester d'acide ricinoléique ainsi obtenu est destiné notamment à la préparation d'acide 11-amino undécanoïque, suivant l'enchaînement suivant de réactions :
- pyrolyse ou craquage de l'ester notamment méthylique de l'acide ricinoléique, conduisant à l'obtention d'heptanal et d'undécylénate de méthyle ;
- hydrolyse de l'undécylénate de méthyle conduisant à l'obtention d'acide undécylénique ;
- hydrobromuration de l'acide undécylénique conduisant à l'obtention de l'acide 11-bromoundécanoïque, et
- amination de l'acide 11-bromoundécanoïque conduisant à l'obtention de l'acide 11-amino undécanoïque.

Dans une variante de réalisation, l'ester d'acide ricinoléique issu du procédé selon l'invention peut avantageusement être directement utilisé dans la synthèse d'acide 11-amino undécanoïque. Lorsque l'ester d'acide ricinoléique n'est pas suffisamment pur, une étape de purification supplémentaire peut être nécessaire, avant de le soumettre à la réaction de pyrolyse.

L'acide 11-amino undécanoïque ainsi obtenu est destiné principalement à la synthèse par condensation de polyamide 11 ou Rilsan^{®} 11.

Les esters d'acides non fonctionnalisés obtenus par le procédé selon l'invention peuvent être utilisés comme biodiesel. Dans ce cas, il pourrait être avantageux d'utiliser comme solvant d'extraction directement une coupe hydrocarbure, par exemple du gazole ou du kérosène.

Le procédé d'extraction sélective selon l'invention présente de multiples avantages. Le procédé selon l'invention permet de résoudre simultanément de nombreux problèmes liés à la transestérification de l'huile de ricin. Ce procédé permet avantageusement de passer directement de la graine aux esters d'acides gras, notamment d'acide ricinoléique, en évitant les étapes de trituration, de raffinage, de purification et la production de sous-produits. Les esters d'acide ricinoléique obtenus par le procédé selon l'invention conviennent particulièrement à la préparation d'acide 11-amino undécanoïque, comme mentionné plus haut. Par ailleurs, le procédé conduit à l'obtention de tourteaux détoxifiés, qui peuvent être manipulés sans danger par l'homme et peuvent être utilisés dans l'alimentation animale sans risque d'empoisonnement pour les animaux.

Grâce à l'étape de conditionnement spécifique des graines, il est possible d'augmenter la surface de contact pour une meilleure percolation du mélange alcool-catalyseur et donc une meilleure extraction des lipides et leur transformation consécutive en esters. Aucune imprégnation préalable des graines conditionnées n'est nécessaire. La fraction ester obtenue à partir du mélange comprenant des esters d'acides gras et du glycérol convient particulièrement à la fabrication d'acide 11-amino undécanoïque, monomère utilisé dans la synthèse de polyamide 11.

Le fait de partir de graines entières permet :
- d'une part, de limiter fortement la formation de fines, en rendant plus faciles les étapes ultérieures de filtration, et en limitant le risque allergique et toxique puisque les fines sèches ont tendance à se dissiper / disperser dans l'air ambiant ;
- et d'autre part, de maintenir une bonne tenue mécanique du lit de graines aplaties (qui formera le tourteau), propriété très intéressante si l'on souhaite mettre en oeuvre la réaction dans un mode continu.

L'invention et ses avantages seront mieux compris à la lecture des exemples ci-après donnés à titre purement illustratif.

### Exemple 1. Caractérisation de la graine de ricin

Trois lots de graines de ricin ont été évalués eu égard à leurs taux massiques de matières volatiles, matière grasse, leurs taux d'acidité de la matière grasse (exprimés en mg KOH/g) et leurs teneurs en ricine (exprimées en mg ricine/kg graines). Les résultats obtenus figurent dans le Tableau 1.

**Tableau 1**

| **Caractéristiques** | **Méthode** | **Lot 1** | **Lot 2** | **Lot 3** |
|---|---|---|---|---|
| Matières volatiles, % | NF ISO 665 | 5,2 | 5,6 | 5,2 |
| Matière grasse, % MS | NF ISO 659 | 52,2 | 54,0 | 52,2 |
| Acidité de la matière grasse, mg KOH/g | EN 14104 | 0,6 | 1,9 | 0,6 |

### Exemple 2. Conditionnement du flocon de graine de ricin

La graine de ricin issue des bogues de ricin - graine constituée d'une coque fibreuse contenant une amande elle-même recouverte d'une peau fine (cuticule) - est aplatie telle quelle (graine entière) à l'aide d'un aplatisseur à cylindres cannelés, selon un procédé de double aplatissage décrit dans le tableau 2. Cette opération est réalisée par un double passage dans l'aplatisseur en vue d'obtenir un pétale de graine de ricin. Après aplatissage, le pétale est séché dans une étuve ventilée sous courant d'air chaud à 100°C pendant 16 heures en vue d'atteindre une humidité résiduelle inférieure à 2%.

**Tableau 2**

| Appareillage | 1^{er} aplatissage | | 2^{ème} aplatissage | |
|---|---|---|---|---|
| | Vitesse de rotation (tr/min) | Espace inter-cylindres (mm) | Vitesse de rotation (tr/min) | Espace inter-cylindres (mm) |
| Aplatisseur à cylindres Ø 240 mm, pas de cannelure 1strie/cm | 430 | 0,1 | 430 | 0,1 |
| Epaisseur moyenne du pétale (mm) | 0,4 à 0,6 mm | | 0,3 à 0,5 mm | |
| Longueur (mm) | 3 à 4 mm | | 2 à 3 mm | |

### Exemple 3. Essai de trituration réactive en présence d'un mélange de graines oléagineuses

Un essai a été réalisé à partir de mélanges de graines de ricin (lot 1) et de soja. Le lot de fèves de soja a été analysé. Les résultats obtenus figurent dans le Tableau 3.

**Tableau 3**

| **Caractéristiques** | **Méthode** | **fève de soja** |
|---|---|---|
| Matières volatiles, % | NF ISO 665 | 11,3 |
| Matière grasse, % MS | NF ISO 659 | 20,6 |
| Acidité de la matière grasse, mg KOH/g | EN 14104 | 1,6 |

Ces résultats montrent que la graine de soja mise en oeuvre est faiblement acide (IA<2 mg KOH/g) et conforme à la littérature relativement à sa teneur en lipides.

Des essais de trituration réactive ont été réalisés sur la fève de soja isolée et en mélange avec les fèves de ricin (tableau 4).

**Tableau 4**

| **Critère / Essai** | ESSAI 09-E14 | ESSAI 09-E19 | ESSAI 09-E21 |
|---|---|---|---|
| Masse de pétales de graine de ricin du lot 1B, g | 0,0 | 175 | 35 |
| Masse de pétales de fève de soja, g | 350 | 175 | 315 |
| Rapport massique pétale ricin/pétale soja | 0/100 | 50/50 | 10/90 |
| Masse de méthanol, g | 700 | 700 | 700 |
| Masse de soude engagée, g | 1,1 | 1,1 | 1,1 |
| Durée du cycle réactionnel (temps de contact), min | 30 | 30 | 30 |
| Température réaction (°C) | 50 | 50 | 50 |
| Rapport massique méthanol/pétale soja + ricin | 1,15 | 2 | 2 |
| % catalyseur par rapport aux pétales soja + ricin | 0,3 | 0,3 | 0,3 |
| Rendement esters méthyliques, % | 39,2 | 52,3 | 74,0 |
| matière grasse dans le tourteau maigre, % équivalents esters méthyliques | 16,6 | 18,7 | 6,7 |
| Perte en esters (valeur calculée)**, % | 44,2 | 29 | 19,3 |
| Rendement glycérine, % | 303 | 262 | 202 |

| | | | |
|---|---|---|---|
| * perte en esters = [masse d'esters théorique] - [masse d'esters produits] - [masse potentielle d'esters dans le tourteau maigre] | | | |

Ces résultats présentés montrent que :
- la fève de soja isolée, simplement aplatie selon un processus de double-aplatissage, conduit à un rendement médiocre en esters méthyliques (39,2%). Le tourteau issu de cet essai est encore riche en huile ;
- en présence de pétales de graines de ricin (mélange 50/50), on constate que le rendement en esters méthyliques (52,3%) correspond environ à l'addition des rendements respectifs obtenus en présence des graines isolées (44% théorique) ;
- en présence du mélange de pétales ricin-soja 10/90, le rendement en esters méthyliques (74%) est légèrement supérieur à celui des graines prises isolément (70% théorique).

L'ensemble de ces résultats montre qu'il techniquement possible d'obtenir un rendement appréciable en esters à partir d'un mélange de pétales de graines ricin/soja.

Les esters obtenus ont été analysés et les résultats obtenus sont montrés dans le tableau 5. Les valeurs entre parenthèses représentent le pourcentage théorique en acides gras.

**Tableau 5**

| Critère / Essai | ESSAI 09-E14 | ESSAI 09-E19 | ESSAI 09-E21 |
|---|---|---|---|
| *Rapport massique pétale ricin*/*pétale soja* | *0,0* | *50*/*50* | *10*/*90* |
| Indice d'acide (mg KOH/g) | <0,1 | 0,41 | 0,11 |
| Teneur en MeC16 (%) | 10,22 | 2,20 (3,3) | 6,39 (7,8) |
| Teneur en MeC18 :2 (%) | 30,01 | 4,88 (6,6) | 34,64 (14,5) |
| Teneur en MeC18 :1 (%) | 47,11 | 14,11 (22,0) | 16,66 (53,8) |
| Teneur en Me C18 :0 (%) | 9,19 | 1,35 (1,7) | 2,57 (3,3) |
| Teneur en Ricinoléate de méthyle (%) | nd | 75,64 (66,3) | 38,88 (20,7) |
| Teneur en Monoglycéride (%) | 3,16 | 1,50 | 0,31 |
| Teneur en Diglycéride (%) | 0,21 | 0,11 | 0,10 |
| Teneur en Triglycéride (%) | nd | nd | nd |

L'ensemble de ces résultats montre que :
- sur le plan qualitatif, l'ester méthylique de soja produit à parti des pétales de fèves isolées, est peu acide (IA<0,1). En revanche, il est riche en monoglycérides ce qui indique que la réaction de transestérification n'est pas complète ;
- en présence de mélanges de pétales ricin-soja, il apparaît clairement que le pétale de ricin dont les lipides sont plus solubles dans le méthanol que ceux du soja, est plus réactif dans le procédé de co-trituration que celui du soja isolé. En effet, les teneurs en ricinoléate de méthyle demeurent importantes puisqu'on observe un enrichissement notable en cet ester par rapport aux concentrations théoriques.

### Exemple 4. Essais de trituration réactive en présence d'un cosolvant (étapes a) et b) du procédé selon l'invention)

### Exemple 4.1. Essai en présence d'hexane et de pétales de graines de ricin

Un essai de trituration réactive a été réalisé en présence de pétales de graines de ricin, de méthanol et d'hexane en vue d'améliorer le rendement en esters (tableau 6) :

**Tableau 6**

| **Critère / Essai** | ESSAI 09-E06 | ESSAI 09-E07 |
|---|---|---|
| Masse de pétales de graine de ricin du lot 2, g | 350 | 350 |
| Masse de méthanol, g | 400 | 360 |
| Masse d'hexane, g | - | 40 |
| Masse de soude engagée, g | 1,1 | 1,1 |
| Rapport massique hexane/méthanol | 0,0 | 0,11 |
| Nombre de phases du mélange méthanol-hexane | 1 | 1 |
| Rapport massique (méthanol + hexane)/(pétales soja + ricin) | 1,15 | 1,15 |
| Durée du cycle réactionnel (temps de contact), min | 30 | 30 |
| Température réaction (°C) | 50 | 40 |
| % catalyseur par rapport aux pétales ricin | 0,3 | 0,3 |
| Rendement esters méthyliques, % | 79,3 | 84,3 |
| matière grasse dans le tourteau maigre, % équivalents esters méthyliques | 4,3 | 5,7 |
| Perte en esters (valeur calculée)**, % | 16,4 | 10 |
| Rendement glycérine, % | 215 | 173 |

| | | |
|---|---|---|
| ** perte en esters = [masse d'esters théorique] - [masse d'esters produits] - [masse potentielle d'esters dans le tourteau maigre] | | |

Ces résultats montrent qu'en présence d'hexane, le rendement en esters est nettement amélioré (79,3 → 84,3%), alors même que la température de réaction a été diminuée de 10°C par rapport à l'essai en absence d'hexane. Ce résultat est en partie lié à un meilleur épuisement du tourteau puisque moins de 5 points de rendement en esters sont perdus à ce stade. L'ajout d'hexane se traduit aussi par un impact positif sur le rendement en glycérine qui diminue indiquant que cette dernière est moins chargée en matière grasse et en fractions végétales plus solubles dans le méthanol (phospholipides, hydrates de carbone, protéines). L'ajout d'un co-solvant améliore le rendement en esters.

Les esters obtenus ont été analysés et les résultats obtenus sont montrés dans le tableau 7.

**Tableau 7**

| Critère / Essai | ESSAI 09-E06 | ESSAI 09-E07 |
|---|---|---|
| *Rapport massique hexane*/*méthanol* | *0*,*0* | *10* |
| Indice d'acide (mg KOH/g) | <0,01 | <0,01 |
| Teneur en MeC16 (%) | 0,78 | 0,76 |
| Teneur en MeC18 :2 (%) | 2,51 | 2,49 |
| Teneur en MeC18 :1 (%) | 3,21 | 3,48 |
| Teneur en Me C18 :0 (%) | 0,93 | 0,98 |
| Teneur en Ricinoléate de méthyle (%) | 86,05 | 89,55 |
| Teneur en Monoglycéride (%) | 6,53 | 2,74 |
| Teneur en Diglycéride (%) | nd | nd |
| Teneur en Triglycéride (%) | nd | nd |

L'ensemble de ces résultats montre que, sur le plan qualitatif, la teneur en ricinoléate de méthyle est plus élevée en présence d'hexane. La présence d'hexane a un fort impact sur la teneur finale en monoglycérides laquelle décroît en présence d'un co-solvant de type hydrocarbure. Les acidités finales des esters sont en revanche peu impactées par la présence ou l'absence d'hexane.

### Exemple 4.2. Essai en présence d'un solvant hydrocarbure non miscible dans le méthanol

Un essai de trituration réactive des graines de ricin (lot 3) a été réalisé en présence d'un solvant insoluble avec le méthanol, le Kerdane® fourni par la société ONYX, une coupe hydrocarbure combustible plus lourde que l'hexane. Dans le cadre de cet essai, les graines de ricin n'ont pas été séchées après aplatissage. L'objectif de cet essai est d'obtenir d'une part une coupe enrichie en ricinoléate de méthyle et d'autre part, une coupe enrichie en esters méthyliques non hydroxylés pouvant être utilisée telle quelle comme combustible ou carburant diesel (biodiesel). Il s'agit donc de réaliser en une seule étape à partir des graines de ricin 1) la préparation d'un ester concentré en ricinoléate de méthyle, 2) une coupe combustible enrichie en esters gras non hydroxylé proche d'un diesel additivé, 3) de la glycérine et un tourteau délipidé.

L'étape de trituration réactive est réalisée en présence d'un mélange méthanol-Kerdane®-soude (rapport massique 1/1/0,003) et de pétales de graine de ricin non séchés après aplatissage.

Après récupération du 1^{er} miscella, ce dernier est décanté. La phase légère riche en Kerdane® et séparée de la phase lourde méthanolique, puis mélangée avec du méthanol hydraté à 98% dans un rapport massique de 1/1. Ce nouveau mélange biphasique est envoyé sur le lit de pétale de graine de ricin pour produire un second miscella. Ce dernier est à nouveau décanté : la phase lourde méthanolique est regroupée avec la 1^{ère} phase méthanolique.

La seconde phase légère est à nouveau mélangée à du méthanol à 98% toujours dans un rapport massique 1/1 pour être envoyée à son tour sur le lit de pétale. Le troisième miscella récupéré est à alors décanté. La phase méthanolique rejoint le pool des phases lourdes, alors que la phase Kerdane® est comme précédemment à nouveau envoyée sur le lit de pétale après avoir été mixé à du méthanol 98% (rapport massique 1/1).

Le quatrième miscella obtenu est décanté puis stocké alors que la phase lourde rejoint le pool des phases méthanoliques.

Le lit de pétale est enfin lavé par du méthanol hydraté à 98% dans un rapport massique méthanol/pétale de 1/1. L'ensemble des miscella méthanoliques rejoint le pool des phases lourdes, lequel sera traité pour en extraire les esters gras purifiés.

Les résultats obtenus sont présentés dans le tableau 8.

Cet essai confirme que l'utilisation d'un co-solvant hydrocarbure non miscible au méthanol permet d'extraire avec un rendement global élevé les esters méthyliques (81,1 + 16,6 = 97,7 %). En particulier, le ricinoléate de méthyle est extrait avec un rendement élevé (83,6%). On constate qu'en présence de Kerdane, l'eau n'est pas un poison de la réaction de transestérification.

De même, l'emploi d'un co-solvant non miscible avec le méthanol permet d'extraire avec une bonne sélectivité les esters gras non hydroxylés, lesquels se retrouvent concentrés dans la phase légère. Le faible rendement en glycérine ainsi que la faible teneur du tourteau en lipides résiduels indiquent une transformation effective de la matière grasse en esters. Enfin, l'utilisation de Kerdane® permet l'obtention directe d'une coupe diesel additivée à 10% en esters méthyliques.

**Tableau 8**

| **Critère / Essai** | ESSAI 09-E32 |
|---|---|
| Masse de pétales de graine de ricin du lot 3 non séché, g (1) | 300 |
| Masse de méthanol, g (1) | 300 |
| Masse de Kerdane®, g (1) | 300 |
| Masse de soude engagée, g (1) | 0,9 |
| Rapport massique Kerdane®/méthanol | 1,0 |
| Nombre de phases du mélange méthanol-Kerdane® | 2 |
| Rapport massique (méthanol)/(pétales ricin) | 1,0 |
| Rapport massique (Kerdane®)/(pétales ricin) | 1,0 |
| Durée du cycle réactionnel (temps de contact), min | 30 |
| Température réaction (°C) | 50 |
| % catalyseur par rapport aux pétales de ricin | 0,3 |
| Rendement en esters dans la phase lourde (phase méthanolique), % | 81,1 |
| Rendement d'extraction du ricinoléate de méthyle (phase lourde), % | 83,6 |
| Rendement en esters dans la phase légère (hors Kerdane), % | 16,6 |
| % ester dans Kerdane, % | 10,2 |
| Rendement d'extraction des esters non hydroxylés (phase légère), % | 78,0 |
| matière grasse dans le tourteau maigre, % équivalents esters méthyliques | 2,2 |
| Perte en esters (valeur calculée)**, % | 0,0 |
| Rendement glycérine, % | 137 |

| | |
|---|---|
| ** perte en esters = [masse d'esters théorique] - [masse d'esters produits] - [masse potentielle d'esters dans le tourteau maigre] (1) quantité engagée en trituration réactive c'est-à-dire lors du premier passage sur le lit de pétale de graine de ricin | |

Les esters obtenus ont été analysés et les résultats obtenus sont montrés dans le tableau 9.

**Tableau 9**

| **Critère / Essai** | **Ester phase Lourde (méthanol)** | **Ester phase Légère (Kerdane®)** |
|---|---|---|
| | **09-E32** | **09-E32** |
| Indice d'acide (mg KOH/g) | 0,15 | NR |
| Teneur en MeC16 (%) | 0,63 | *5,29* |
| Teneur en MeC18 :2 (%) | 2,35 | *20,9* |
| Teneur en MeC18 :1 (%) | 2,35 | *17,1* |
| Teneur en Me C18 :0 (%) | 0,84 | *8,69* |
| Teneur en Ricinoléate de méthyle (%) | 93,32 | 47,30 |
| Teneur en Monoglycéride (%) | 0,51 | 0,75 |
| Teneur en Diglycéride (%) | nd | nd |
| Teneur en Triglycéride (%) | nd | nd |

| | | |
|---|---|---|
| Nd - produit non détecté | | |

L'ensemble de ces résultats montre que :
- sur le plan qualitatif, les esters issus de la phase lourde méthanolique sont enrichis en ricinoléate de méthyle (93,3%), pauvres en monoglycérides et très peu acides (IA = 0,15 mg KOH/g) et inversement appauvris en esters non hydroxylés ;
- les esters de la phase légère sont appauvris en acide ricinoléique et riches en acides gras non hydroxylés par rapport à l'huile préalablement contenue dans la graine de ricin. Leur teneur résiduelle en monoglycérides demeure faible.
- le procédé peut être aisément amélioré en engageant moins ou pas de Kerdane® au cours des étapes de lavage du lit de pétales ce qui aura pour effet de limiter la teneur en ricinoléate de méthyle dans la phase légère.

### Exemple comparatif 5. Procédé PETROBRAS d'obtention d'esters d'acides gras selon US 7.112.229.

Les caractéristiques des réactifs et de la graine mise en oeuvre dans l'essai sont présentées dans les tableaux 10 et 11.

**Tableau 10**

| **Réactifs et graine de ricin** | **Fournisseur** | **Pureté (%)** |
|---|---|---|
| Ethanol anhydre | CIRON | 99,9 |
| Ethylate de sodium | SIGMA ALDRICH | 96 |
| Graine de ricin | Arkema | - |

**Tableau 11**

| **Caractéristiques** | **Méthode** | **Lot 3** |
|---|---|---|
| Matières volatiles, % | NF ISO 665 | 5,2 |
| Matière grasse, % MS | NF ISO 659 | 52,2 |
| Acidité de la matière grasse, mg KOH/g | EN 14104 | 0,6 |

L'essai a été reproduit tel que décrit dans le document US 7.112.229. En tant que catalyseur a été utilisé de l'éthylate de sodium à 96%. Aussi, le titre en éthylate n'étant pas indiqué, il a été considéré que le schéma de procédé illustré à la figure 1 de ce document exprimait une valeur en équivalent éthylate, soit 40 g. De même, l'essai a été reproduit en présence d'une graine séchée à 0,5% d'humidité.

Les figures 2 et 3 annexées et le tableau 12 présentent les bilans matières obtenus. La figure 1 présente le bilan selon le document US 7.112.229. La figure 2 présente le bilan selon l'exemple comparatif 5.

Les figures 2 et 3 et le tableau 12 mettent en évidence un écart très important sur les masses de produits et de coproduits circulants. A titre d'exemple : + 250% d'éthanol récupéré dans le tourteau, - 100% d'ester éthylique et de glycérine puisque aucun de ces 2 produits cibles n'est récupéré, - 40% d'extrait sec dans le miscella. L'extrait sec du miscella est monophasique et liquoreux (plus visqueux qu'un ester éthylique). Aucune décantation de glycérine n'est obtenue.

**Tableau 12**

| **Rendement** | **Exemple selon** US 7112229 | **Essai comparatif** | **Ecart entre les 2 essais (%)** |
|---|---|---|---|
| Tourteau sec, g | 520 | 646 | + *24%* |
| Ethanol récupéré du tourteau, g | 80 | 281 | + *250%* |
| Extrait sec, g | 560 | 337 | - *40%* |
| Ester éthylique, g | 505 | 0,0 | - *100%* |
| Glycérine, g | 55 | 0,0 | - *100%* |

Une analyse plus poussée de l'extrait sec du miscella a été réalisée en déterminant sa teneur en ester éthylique et en glycérides (par CPG) ainsi que la teneur en cendres (le taux de cendres permet de quantifier la quantité de sodium présent sous forme de sels, de savons et de catalyseur non consommé). Nous avons obtenu les résultats suivants :
- Esters éthyliques : non détecté
- Triglycérides : 100%
- Diglycérides : non détecté
- Monoglycérides : non détecté
- Cendres : 0,4%.

L'extrait sec du miscella n'est constitué au plan lipidique que de triglycérides non transformés en esters. La teneur en cendres indique que le sodium est faiblement présent dans le miscella et non sous forme de savons comme on pouvait le supposer. Le sodium doit probablement être piégé dans le tourteau. Enfin, l'analyse chromatographique n'a pas détecté la présence d'esters.

En conclusion, il apparaît donc que le procédé décrit dans le document US 7.112.229 ne produit pas d'ester éthylique d'acide ricinoléique.

## Revendications

1. Procédé d'extraction sélective d'esters d'acides gras fonctionnalisés à partir de graines de plantes oléagineuses comprenant :
a. au moins une étape d'extraction des esters d'acides gras consistant en l'introduction simultanée dans un réacteur contenant lesdites graines, d'un alcool léger anhydre, d'un catalyseur basique et d'un solvant d'extraction non miscible avec ledit alcool léger et dans lequel ledit ester d'acide gras fonctionnalisé n'est pas soluble, conduisant à l'obtention d'un mélange d'esters et de glycérol, et
b. au moins une étape d'extraction sélective des esters d'acides gras fonctionnalisés par introduction dans le réacteur dudit solvant d'extraction à contre-courant de l'alcool léger, conduisant à l'obtention d'une phase alcool enrichie en esters d'acides gras fonctionnalisés, d'une phase solvant contenant les autres esters d'acides gras non fonctionnalisés, d'une phase glycérol et d'un tourteau.

2. Procédé selon la revendication 1, dans lequel l'alcool léger est le méthanol.

3. Procédé selon l'une des revendications 1 et 2 dans lequel le catalyseur alcalin est la soude.

4. Procédé selon l'une des revendications 1 à 3 dans lequel le solvant d'extraction est l'hexane.

5. Procédé selon l'une des revendications 1 à 4 comprenant au moins deux étages d'extraction.

6. Procédé selon la revendication 5 comprenant 5 étages d'extraction.

7. Procédé selon l'une des revendications 1 à 6 comprenant en outre une étape de conditionnement des graines réalisée au préalable, ladite étape de conditionnement comprenant une première opération d'aplatissage des graines, suivie d'une opération de séchage des graines aplaties.

8. Procédé selon la revendication 7 dans lequel l'étape de conditionnement des graines comprend en outre une opération de préchauffage des graines à une température inférieure ou égale à 100°C, effectuée avant l'opération d'aplatissage.

9. Procédé selon l'une des revendications 7 et 8 dans lequel l'opération de séchage de graines aplaties est réalisée rapidement après aplatissage, en moins de une heure, de préférence après 5 à 10 minutes, à une température suffisante pour réduire le taux d'humidité des graines à 2% en poids ou moins.

10. Procédé selon l'une des revendications 1 à 9 dans lequel l'ester d'acide gras fonctionnalisé est un ester d'acide gras hydroxylé.

11. Procédé selon la revendication 10 dans lequel lesdites graines sont des graines de ricin et ledit ester d'acide gras hydroxylé est l'ester ricinoléique.

12. Procédé selon l'une quelconque des revendications 1 à 11 dans lequel ladite phase alcool enrichie en esters d'acides gras hydroxylés est soumise à une succession de réactions chimiques conduisant à l'obtention d'acide 11-amino undécanoïque.

13. Procédé selon l'une quelconque des revendications 1 à 12 dans lequel ledit solvant d'extraction étant le gazole, le kerdane ou le kérosène, ladite phase alcool appauvrie en esters d'acides gras hydroxylés est utilisée comme biodiesel.

14. Procédé selon l'une des revendications 1 à 9 dans lequel l'ester d'acide gras fonctionnalisé est un ester d'acide gras époxydé.

## Patentansprüche

1. Verfahren zur selektiven Extraktion von funktionalisierten Fettsäureestern aus Samen von Ölsaaten, das Folgendes umfasst:
a. mindestens einen Schritt, in dem Fettsäureester extrahiert werden, der daraus besteht, dass man einen Reaktor, der diese Samen enthält, gleichseitig mit einem wasserfreien leichten Alkohol, einem basischen Katalysator und einem Extraktionslösungsmittel, das mit dem leichten Alkohol nicht mischbar ist und in dem der funktionalisierte Fettsäureester nicht löslich ist, beschickt, wodurch man zu einer Mischung aus Estern und Glycerin gelangt, und
b. mindestens einen Schritt, in dem man funktionalisierte Fettsäureester selektiv dadurch extrahiert, dass man einen leichten Alkohol im Gegenstrom in den Reaktor des Extraktionslösungsmittels einführt, wodurch man eine mit funktionalisierten Fettsäureestern angereicherte Alkoholphase, eine Lösungsmittelphase, die die anderen, nichtfunktionalisierten Fettsäureester enthält, eine Glycerinphase und einen Presskuchen erhält.

2. Verfahren nach Anspruch 1, bei dem es sich bei dem leichten Alkohol um Methanol handelt.

3. Verfahren nach einem der Ansprüche 1 und 2, bei dem es sich bei dem alkalischen Katalysator um Natriumhydroxid handelt.

4. Verfahren nach einem der Ansprüche 1 bis 3, bei dem es sich bei dem Extraktionslösungsmittel um Hexan handelt.

5. Verfahren nach einem der Ansprüche 1 bis 4, das mindestens zwei Extraktionsstufen umfasst.

6. Verfahren nach Anspruch 5, das 5 Extraktionsstufen umfasst.

7. Verfahren nach einem der Ansprüche 1 bis 6, das weiterhin einen zuvor durchgeführten Schritt, bei dem die Samen konditioniert werden, umfasst, wobei der Konditionierungsschritt einen ersten Arbeitsgang des Quetschens der Samen, gefolgt von einem Arbeitsgang des Trocknens der gequetschten Samen, umfasst.

8. Verfahren nach Anspruch 7, wobei der Schritt des Konditionierens der Samen weiterhin einen vor dem Arbeitsgang des Quetschens durchgeführten Arbeitsgang des Vorerhitzens der Samen auf eine Temperatur von 100°C oder darunter umfasst.

9. Verfahren nach einem der Ansprüche 7 und 8, bei dem der Arbeitsgang der Trocknung der gequetschten Samen rasch nach dem Quetschen erfolgt, und zwar innerhalb von weniger als einer Stunde, vorzugsweise nach 5 bis 10 Minuten, und bei einer Temperatur, die für das Reduzieren des Wassergehalts der Samen auf 2 Gew.-% oder weniger ausreicht.

10. Verfahren nach einem der Ansprüche 1 bis 9, bei dem es sich bei dem funktionalisierten Fettsäureester um einen hydroxylierten Fettsäureester handelt.

11. Verfahren nach Anspruch 10, bei dem es sich bei den Samen um Rizinussamen handelt und es sich bei dem hydroxylierten Fettsäureester um den Ricinolsäureester handelt.

12. Verfahren nach einem der Ansprüche 1 bis 11, bei dem die mit hydroxylierten Fettsäureestern angereicherte Alkoholphase einer Abfolge von chemischen Reaktionen unterzogen wird, wodurch man zu der 11-Aminoundecansäure gelangt.

13. Verfahren nach einem der Ansprüche 1 bis 12, wobei, wenn es sich bei dem Extraktionslösungsmittel um Gasöl, Kerdane oder Kerosin handelt, die an hydroxylierten Fettsäureestern abgereicherte Alkoholphase als Biodiesel eingesetzt wird.

14. Verfahren nach einem der Ansprüche 1 bis 9, wobei es sich bei dem funktionalisierten Fettsäureester um einen epoxidierten Fettsäureester handelt.

## Claims

1. A method for the selective extraction of functionalized fatty acid ester(s) from seeds of oleaginous plants, comprising:
a. at least one step of extracting the fatty acid esters that consists in simultaneously feeding, into a reactor containing said seeds, a light anhydrous alcohol, a basic catalyst and an extraction solvent which is immiscible with said light alcohol and in which said functionalized fatty acid ester is not soluble, so as to obtain a mixture of esters and glycerol, and
b. at least one step of selectively extracting the functionalized fatty acid esters by feeding said extraction solvent into the reactor in a countercurrent direction with respect to the light alcohol, so as to obtain an alcohol phase enriched with functionalized fatty acid esters, a solvent phase containing the other nonfunctionalized fatty acidesters, a glycerol phase and an oil cake.

2. The method as claimed in claim 1, in which the light alcohol is methanol.

3. The method as claimed in either of claims 1 and 2, in which the alkaline catalyst is sodium hydroxide.

4. The method as claimed in one of claims 1 to 3, in which the extraction solvent is hexane.

5. The method as claimed in one of claims 1 to 4, comprising at least two extraction stages.

6. The method as claimed in claim 5, comprising 5 extraction stages.

7. The method as claimed in one of claims 1 to 6, also comprising a seed processing step carried out beforehand, said processing step comprising a first operation in which the seeds are flattened, followed by an operation in which the flattened seeds are dried.

8. The method as claimed in claim 7, in which the seed processing step also comprises an operation in which the seeds are preheated at a temperature of less than or equal to 100°C, carried out before the flattening operation.

9. The method as claimed in either of claims 7 and 8, in which the operation in which the flattened seeds are dried is carried out rapidly after flattening, in less than one hour, preferably after 5 to 10 minutes, at a temperature sufficient to reduce the moisture content of the seeds to 2% by weight or less.

10. The method as claimed in one of claims 1 to 9, in which the functionalized fatty acid ester is a hydroxylated fatty acidester.

11. The method as claimed in claim 10, in which said seeds are castor seeds and said hydroxylated fatty acidester is the ricinoleic ester.

12. The method as claimed in any one of claims 1 to 11, in which said alcohol phase enriched with hydroxylated fatty acid esters is subjected to a succession of chemical reactions so as to obtain 11-aminoundecanoic acid.

13. The method as claimed in any one of claims 1 to 12, in which since said extraction solvent is diesel oil, kerdane or kerosene, said alcohol phase depleted with respect to hydroxylated fatty acid esters is used as biodiesel.

14. The method as claimed in one of claims 1 to 9, in which the functionalized fatty acid ester is an epoxidized fatty acid ester.
